# EUROPEAN PATENT APPLICATION

(11) **EP 2 123 709 A1**
(43) Date of publication of application: **25.11.2009**
(21) Application number: 07850584.9
(22) Date of filing: 07.12.2007
(51) Int. Cl.: C08L 59/00, C08G 2/10, C08K 5/13, C08K 5/20, C08K 5/24

(54) **POLYACETAL RESIN COMPOSITION**

(30) Priority: 25.12.2006 JP 2006347834
(71) Applicant: Polyplastics Co., Ltd., Tokyo 108-8280 (JP)
(72) Inventor: SHIMODA, Akihide, Fuji-shi Shizuoka 416-8533 (JP); IKETANI, Hiraku, Fuji-shi Shizuoka 416-8533 (JP)
(74) Representative: Escher, Thomas
(86) International application number: PCT/JP2007/074068
(87) International publication number: WO 2008/078570

(57) **Abstract**

The present invention provides a polyacetal resin material having reduced generation of gases such as formaldehyde to the utmost limit while maintaining or further improving the excellent properties such as mechanical properties, processability and surface properties, of which the polyacetal resin is inherently possessed. In detail, the present invention provides a polyacetal resin composition, obtained by blending, to 100 parts by weight of (A1) a polyacetal resin having substantially linear molecular structure, 0.01 to 20.0 parts by weight of (A2) a polyacetal resin having a branched or crosslinked structure, 0.01 to 5.0 parts by weight of (B) a hindered phenol-based antioxidant and 0.01 to 5.0 parts by weight of (C) a hydrazide compound.

## Description

### Technical Field

The present invention relates to a polyacetal resin composition having excellent mechanical properties, processability and stability, and significantly suppressing the amount of formaldehyde or the like generated.

### Background Art

Polyacetal resins are excellent in mechanical properties, sliding properties, processability, surface properties, and the like, and molded articles thereof are utilized in various fields.

With respect to those polyacetal resins, recently, there is tendency that it is strongly required to reduce the generation of gases such as formaldehyde to the utmost limit while maintaining or further improving the excellent mechanical properties, processability, surface properties, and the like. However, it is extremely difficult to obtain a polyacetal resin material which satisfies such all properties according to conventionally known methods.

For example, it has been conventionally performed that various stabilizers are added for enhancing thermal stability of polyacetal resins to suppress the amount of formaldehyde or the like generated by thermal decomposition of the resins, and it has also been well known since a long time ago that a hydrazide compound is added as a stabilizer (JP-A 4-345648). However, when, in order to achieve a high thermal stability and reduce significantly the generation of gases such as formaldehyde by the addition of a hydrazide compound, the amount of hydrazide compound is regulated, there is a case where excellent mechanical properties, processability and the like, of which the polyacetal resin is inherently possessed are impaired, and the addition becomes a factor that causes the bleeding of blended components.

On the other hand, it has been conventionally known that inorganic fillers such as glass fiber are blended in order to improve mechanical properties of the polyacetal resins. However, due to shear force applied during melt kneading at the time of preparation of such a resin material, the resins become easily decomposed, and thus, it is difficult to maintain the generation of gases such as formaldehyde at a low level. In addition, due to the presence of the inorganic fillers, excellent properties such as sliding properties, processability and surface properties, of which the polyacetal resin is inherently possessed, become remarkably impaired.

### Disclosure of the Invention

As mentioned above, according to conventionally known methods, it has been difficult to obtain a polyacetal resin material having reduced generation of gases such as formaldehyde to the utmost limit while maintaining or further improving the excellent properties such as mechanical properties, processability and surface properties, of which the polyacetal resin is inherently possessed.

An object of the present invention is to solve the problems and to provide a resin material having those properties.

As a result of intensive study to provide a polyacetal resin composition which can meet such requirements, the present inventors have found that the object can be achieved by the selection of the structure of a polyacetal resin as a base resin and the selection of components to be blended, and have completed the present invention.

Namely, the present invention relates to a polyacetal resin composition, obtained by blending, to 100 parts by weight of (A1) a polyacetal resin having substantially linear molecular structure, 0.01 to 20.0 parts by weight of (A2) a polyacetal resin having a branched or crosslinked structure, 0.01 to 5.0% by weight of (B) a hindered phenol-based antioxidant and 0.01 to 5.0 parts by weight of (C) a hydrazide compound.

According to the present invention, it is possible to provide a polyacetal resin composition having excellent mechanical properties and the like, and having reduced generation of gases such as formaldehyde.

### Detailed Description of the Invention

The present invention will be explained in detail in the followings. First, the polyacetal resin having substantially linear molecular structure (A1) used in the present invention represents a high-molecular compound having an oxymethylene group (-CH₂O-) as a main structural unit and having no branched structure and crosslinked structure to be introduced intentionally. Typical examples of such a polyacetal resin (A1) include a polyacetal homopolymer consisting substantially of an oxymethylene group repeating unit, and a polyacetal copolymer (including block copolymer) comprising an oxymethylene unit as a main structure and a small amount of other structural units which do not form branched and crosslinked structures, particularly C₂₋₆ oxyalkylene units. According to the present invention, as the polyacetal resin (A1), any of those polyacetal resins can be used, and if necessary, a blend of two or more of polyacetal resins having different properties can also be used. From the standpoint of moldability, thermal stability and the like, the polyacetal copolymer is preferably used.

Preferred polyacetal copolymer is a copolymer prepared by copolymerizing 99.95 to 80.0% by weight of (a) trioxane with 0.05 to 20.0% by weight of (b) a compound selected from a cyclic ether compound and a cyclic formal compound, having no substituent. More preferable is a copolymer prepared by copolymerizing 99.9 to 90.0% by weight of the trioxane (a) with 0.1 to 10.0% by weight of the aforementioned compound (b).

Examples of a comonomer component (the above compound (b)) used for the preparation of the polyacetal copolymer include, for instance, ethylene oxide, 1,3-dioxolan, diethylene glycol formal, 1, 4- butanediol formal, 1,3-dioxane, propylene oxide, and the like. Particularly preferable are one or two or more selected from ethylene oxide, 1,3-dioxolan, 1,4-butanediol formal and ethylene glycol formal. Preparation method of the polyacetal resin (A1) is not particularly limited, and the polyacetal resin can be prepared by known methods. From industrial point of view, continuous bulk polymerization method is preferable.

The polyacetal copolymer used in the present invention has preferably a melt index (measured at 190°C under a load of 2160 g) of 1 to 50 g/min. Melt index can be controlled by increasing or decreasing the amount of a chain transfer agent used in the polymerization, such as methylal. Preferable polyacetal copolymer used in the present invention has 1.0 mmol/kg or less of hemiformal terminal group, 2.0 mmol/kg or less of formyl terminal group, and 0.5% by weight or less of an unstable terminal group, more preferably 0.6 mmol/kg or less of hemiformal terminal group, 0.5 mmol/kg or less of formyl terminal group, and 0.3% by weight or less of an unstable terminal group. The use of the polyacetal copolymer having such terminal properties as the polyacetal resin (A1) contributes effectively to the preparation of the polyacetal resin composition having sufficiently reduced generation of formaldehyde, which is one of the objects according to the present invention.

Here, the hemiformal terminal group is represented by -OCH₂OH, and is also referred to as hydroxymethoxy group or hemiacetal terminal group. The formyl terminal group is represented by -CHO. The amount of the hemiformal terminal group and formyl terminal group can be measured by ¹H-NMR measurement, and the concrete measuring method can be referred to the method described in JP-A 2001-11143. The amount of an unstable terminal group represents an amount of a terminal part of the polyacetal copolymer, which is unstable against heat and base and is easily decomposed. The amount of an unstable terminal group is measured by charging a pressure-proof airtight vessel with 1 g of polyacetal copolymer and 100 ml of 50% (volume %) aqueous methanol solution containing 0.5% (volume %) of ammonium hydroxide, heat-treating at 180°C for 45 minutes, cooling, opening the vessel, and quantitatively measuring an amount of formaldehyde decomposed and dissolved in the solution thus obtained, and is represented as % by weight with respect to the polyacetal copolymer.

The polyacetal copolymer having such terminal properties may be prepared by regulating polymerization process, catalyst deactivation process, stabilization process through the decomposition and removal of unstable terminals, and combination of these regulation methods. A polyacetal copolymer having more preferable terminal properties may be prepared by the following methods or combination thereof. For example, in the polymerization process, there can be prepared the polyacetal copolymer having desirable terminal properties by using a method of reducing contaminants which cause unstable terminals, such as moisture, methanol and formic acid contained in monomer and comonomer used for polymerization, and conducting polymerization through the use of those monomer and comonomer having such a low content of these contaminants, a method of regulating the amount of catalyst to a small amount along with the decrease of contaminants in the monomer or the use of a highly active catalyst, and an method of conducting polymerization in the presence of a hindered phenol-based antioxidant, and in the catalyst deactivation process, a method of pulverizing efficiently and finely a solid polymer obtained by the polymerization to thereby deactivate a catalyst, and in the stabilization process a method of decomposing and removing unstable terminal parts through the melt-treatment of the polymerized polyacetal copolymer having unstable terminal parts in the presence of a basic compound with an extruder, and after cooling and solidification, further conducting heat-treatment in a high temperature liquid (e.g. water) while maintaining the heterogeneous state, and a method of dissolving by heating the polymerized polyacetal copolymer having unstable terminal parts in a solvent containing a basic compound, and then conducting heat-treatment in the solution state and the like, and there can be prepared the polyacetal copolymer further by the combination of these methods.

Next, the polyacetal resin (A2) having branched or crosslinked structure used in the present invention is obtained by, in the aforementioned preparation of the polyacetal homopolymer or polyacetal copolymer, conducting the copolymerization through the further addition of a compound which is copolymerizable with formaldehyde or trioxane or the like and is capable of forming a branched unit or crosslinked unit through the copolymerization. For example, when copolymerizing the trioxane (a) with the compound (b) selected from the cyclic ether compound or cyclic formal compound having no substituent, a monofunctional glycidyl compound having a substituent (for example, phenyl glycidyl ether, butyl glycidyl ether, or the like) is further added to the copolymerization system to obtain a polyacetal resin having branched structure, and a polyfunctional glycidyl ether compound is also added to the copolymerization system to obtain a polyacetal resin having crosslinked structure.

According to the present invention, the polyacetal resin (A2) having crosslinked structure is preferably used. Among these, preferable is a copolymer prepared by copolymerizing 99.89 to 88.0% by weight of a trioxane (a), 0.1 to 10.0% by weight of a compound selected from a monofunctional cyclic ether compound or monofunctional cyclic formal compound having no substituent (b), and 0.01 to 2.0% by weight of a polyfunctional glycidyl ether compound (c), and particularly preferable is a copolymer prepared by copolymerizing 99.28 to 96.50% by weight of the trioxane (a), 0.7 to 3.0% by weight of the compound (b), and 0.02 to 0.5% by weight of the polyfunctional glycidyl ether compound (c). A crosslikned polyacetal resin having a melt index of 0.1 to 10 g/min is preferable.

Examples of the compound (b) include the same as above, and particularly preferable are one or two or more selected from ethylene oxide, 1,3-dioxolan, 1,4-butanediol formal and diethylene glycol formal.

Examples of the polyfunctional glycidyl ether compounds (c) include ethylene glycol diglycidyl ether, propylene glycol diglycidyl ether, 1,4-butanediol diglycidyl ether, hexamethylene glycol diglycidyl ether, resorcinol diglycidyl ether, bisphenol A diglycidyl ether, polyethylene glycol diglycidyl ether, polypropylene glycol diglycidyl ether, polybutylene glycol diglycidyl ether, glycerol triglycidyl ether, trimethylolpropane triglycidyl ether, pentaerythritol tetraglycidyl ether, sorbitol polyglycidyl ether, sorbitan polyglycidyl ether, polyglycerol polyglycidyl ether, diglycerol polyglycidyl ether, and the like. These compounds can be used alone or in combination.

Among these, particularly preferable is a compound having 3 to 4 glycidyl ether groups in one molecule. Examples include trimethylolpropane triglycidyl ether, glycerol triglycidyl ether, pentaerythritol tetraglycidyl ether. When using the polyacetal copolymer prepared by using the glycidyl ether compound having 3 to 4 glycidyl ether groups in one molecule to form crosslinked structure as the polyacetal resin (A2), the polyacetal resin composition having further more excellent mechanical properties is obtained.

Preparation method of the aforementioned polyacetal resin (A2) having branched or crosslinked structure is not particularly limited, and known methods may be employed as in the preparation of the polyacetal resin (A1).

The polyacetal resin (A2) having branched or crosslinked structure has functions to act as a crystal nucleating agent in a small amount and to make the linear polyacetal resin (A1) highly crystallized to thereby enhance the mechanical properties, and also has function that, with the increase in its blending amount, the polyacetal resin (A2) develops the effect which is presumed to be a certain anchor effect in the linear polyacetal resin (A1), due to the branched or crosslinked structure in the polyacetal resin (A2), and enhances the mechanical properties.

In the present invention, the amount of the polyacetal resin (A2) having branched or crosslinked structure to be blended is 0.01 to 20.0 parts by weight to 100 parts by weight of the linear polyacetal resin (A1), and the effects can be obtained within such a wide range. When the amount of the polyacetal resin (A2) is small, any effect cannot be obtained and the improvement of mechanical properties becomes insufficient. When the amount is too large, the moldability of the polyacetal resin composition is impaired, and thus, mechanical properties thereof also become insufficient. When the polyacetal resin (A2) is used for developing the function as a crystal nucleating agent, an amount is 0.01 to 5 parts by weight, preferably 0.01 to 2 parts by weight to 100 parts by weight of the linear polyacetal resin (A1). When the polyacetal resin (A2) is used for developing the function to improve mechanical properties due to anchor effect, the amount is 1 to 20 parts by weight, preferably 2 to 20 parts by weight to 100 parts by weight of the linear polyacetal resin (A1).

As mentioned above, since the polyacetal resin (A2) having branched or crosslinked structure has the oxymethylene group as a main structural unit, it has properties similar to the linear polyacetal resin (A1) and also has entirely different properties due to the branched or crosslinked structure. By blending such a polyacetal resin (A2) having branched or crosslinked structure with the linear polyacetal resin (A1), it has been unexpected that the effects to be solved according to the present invention can be selectively achieved together with actions on the other components.

The hindered phenol-based antioxidant (B) used in the present invention includes a monocyclic hindered phenol compound, a polycyclic hindered phenol compound bonded by a hydrocarbon group or a group containing sulfur atom, a hindered phenol compound having an ester group or amide group, and the like. Examples of the compounds are 2,6-di-t-butyl-p-cresol, 2,2'-methylenebis(4-methyl-6-t-butylphenol), 4,4'-methylenebis(2,6-di-t-butylphenol), 1,1,3-tris(2-methyl-4-hydroxy-5-t-butylphenyl)butane, 4,4'-butylidenebis(3-methyl-6-t-butylphenol), 1,3,5-trimethyl-2,4,6-tris(3,5-di-t-butyl-4-hydroxybenzyl)benzene, 4,4'-thiobis(3-methyl-6-t-butylphenol), n-octadecyl-3-(4'-hydroxy-3',5'-di-t-butylphenyl)propionate, n-octadecyl-2-(4'-hydroxy-3',5'-di-t-butylphenyl)propionate, 1,6-hexanediol-bis[3-(3,5-di-t-butyl-4-hydroxyphenyl)-propionate], ethylenebis(oxyethylene)bis-[3-(5-tert-butyl-4-hydroxy-m-tryl)propionate], pentaerythritol tetrakis[3-(3,5-di-t-butyl-4-hydroxyphenyl)propionate], 3,9-bis[2-{3-(3-t-butyl-4-hydroxy-5-methylphenyl)-propionyloxy}-1,1-dimethylethyl]-2,4,8,10-tetraoxaspiro-[5.5]undecane, 2-t-butyl-6-(3'-t-butyl-5'-methyl-2'-hydroxybenzyl)-4-methylphenylacrylate, 2-[1-(2-hydroxy-3,5-di-t-pentylphenyl)ethyl]-4,6-di-t-pentylphenylacrylate, di-n-octadecyl-3,5-di-t-butyl-4-hydroxybenzylphosphonate, N,N'-hexamethylenebis(3,5-di-t-butyl-4-hydroxy-dihydrocinnamamide), N,N'-ethylenebis[3-(3,5-di-t-butyl-4-hydroxyphenyl)propionamide], N,N'-tetramethylenebis[3-(3,5-di-t-butyl-4-hydroxyphenyl)propionamide], N,N'-hexamethylenebis[3-(3,5-di-t-butyl-4-hydroxyphenyl)-propionamide], N,N'-ethylenebis[3-(3-t-butyl-5-methyl-4-hydroxyphenyl)propionamide], N,N'-hexamethylenebis[3-(3-t-butyl-5-methyl-4-hydroxyphenyl)propionamide], N,N'-bis[3-(3,5-di-t-butyl-4-hydroxyphenyl)propionyl]hydrazine, N,N'-bis[3-(3-t-butyl-5-methyl-4-hydroxyphenyl)propionyl]-hydrazine, 1,3,5-tris(3,5-di-t-butyl-4-hydroxybenzyl)-isocyanurate, 1,3,5-tris(4-t-butyl-3-hydroxy-2,6-dimethylbenzyl)isocyanurate, and the like.

These hindered phenol-based antioxidants (B) can be used alone or in combination. An additive amount of the hindered phenol-based antioxidant (B) to be added is 0.01 to 5.0 parts by weight, preferably 0.03 to 3.0 parts by weight to 100 parts by weight of the polyacetal resin (A1) having substantially linear. When the amount is small, the effect is insufficient, and when large, there is a possibility that coloring, bleeding, and the like may occur.

The hydrazide compound (C) to be used in the present invention can be either an aliphatic or aromatic hydrazide.

Examples of the aliphatic hydrazides include monohydrazides such as propionic acid hydrazide or thiocarbohydrazide; carbodihydrazide, oxalic acid dihydrazide, malonic acid dihydrazide, succinic acid dihydrazide, glutaric acid dihydrazide, adipic acid dihydrazide, azelaic acid dihydrazide, sebacic acid dihydrazide, 1,12-dodecane dicarbohydrazide, 1,18-octadecane dicarbohydrazide, maleic acid dihydrazide, fumaric acid dihydrazide. 7,11-octadecadiene-1,18-dicarbohydrazide, and the like.

Examples of the aromatic hydrazides include monohydrazides such as salicylic acid hydrazide, 1-naphthoic acid hydrazide, 2-naphthoic acid hydrazide, 3-hydroxy-2-naphthoic acid hydrazide, p-toluenesulfonylhydrazide, aminobenzohydrazide or 4-pyridinecarboxylic acid hydrazide; and dihydrazides such as isophtalic acid dihydrazide, terephtalic acid dihydrazide, 1,5-naphthalenedicarbohydrazide, 1,8-naphthalenedicarbohydrazide, 2,6-naphthalenedicarbohydrazide, 4,4'-oxybisbenzenesulfonylhydrazide or 1,5-diphenylcarbonohydrazide.

Moreover, polyhydrazides such as amino polyacrylamide or 1,3,5-tris(2-hydrazinocarbonylethyl)isocyanurate can be used.

Among these hydrazide compounds, particularly preferable hydrazide compound (D) used in the present invention are stearic acid hydrazide, terephthalic acid dihydrazide, sebacic acid dihydrazide, 1,12-dodecandicarbohydrazide, 1-naphthoic acid hydrazide, 1,5-naphthalenedihydrazide, 1,8-naphthalenedihydrazide, 2,6-naphthalenedihydrazide, and the like.

In the present invention, the aforementioned hydrazide compound may be used alone or in combination of two or more.

The amount of the hydrazide compound (C) to be blended in the present invention is 0.01 to 5.0 parts by weight, preferably 0.03 to 3.0% by weight to 100 parts by weight of the linear polyacetal resin (A1). When the amount of the hydrazide compound (C) is small, the thermal stability of the polyacetal resin composition becomes worse so as to increase the amount of generated gases such as formaldehyde. When the amount of (C) is too large, not only the mechanical properties but also moldability become worse, and surface properties of a molded article are also impaired. Moreover, the hydrazide compound (C) may bleed out.

To the polyacetal resin composition of the present invention, known various stabilizers can further be blended to reinforce the stability. Examples of the stabilizers can include one or two or more of nitrogen-containing compounds such as melamine, guanamine, urea and polyamide; hydroxides of alkali or alikaline earth metal; inorganic salts; and carboxylates, and the like.

In addition, in order to improve properties in accordance with the intended use, various additives may be blended. Examples of the additives are various colorants, lubricants, mold releasing agents, nucleating agents, antistatic agents, surfactants, different polymers, fibrous, plate-like or powder-particle inorganic fillers, and the like.

Among these, an aliphatic bisamide compound is preferable because it contributes to the improvement of moldability, thereby contributing to maintaining the mechanical properties and to reducing the generation of formaldehyde. The amount of the aliphatic bisamide compound to be blended for the objects is 0.01 to 2.0 parts by weight to 100 parts by weight of the polyacetal resin (A1). Whether the blending amount is small or large, the moldability is impaired.

In addition, in the present invention, a polyacetal resin composition colored by 0.01 to 2.0 parts by weight of colorant to 100 parts by weight of the polyacetal resin (A1) has remarkable effects and is one preferred embodiment. Namely, though many of colorants have activity and there are many cases where adverse influences on the stability of the polyacetal resin and the generation of formaldehyde are caused, the composition according to the present invention acts effectively so as to inhibit those influences. Therefore in colored molded articles for which excellent surface properties are required, the effects are remarkable.

Further, in the present invention, when reinforcement through the blending of an inorganic fibrous filler is not substantially conducted, the obtained composition can have more balanced properties, which is preferable. Namely, such composition can give a polyacetal resin material having improved mechanical properties and further having reduced generation of gases such as formaldehyde to the utmost limit while maintaining the excellent properties such as processability, surface properties and sliding properties, of which the polyacetal resin is inherently possessed.

The polyacetal resin composition of the present invention can be easily prepared by generally known methods as conventional resin preparation methods. Any method may be employed, for example, i) a method of mixing all components, introducing the mixed components into a main inlet of a single-or twin-screw extruder, melt-kneading, extruding, and cutting them to thereby obtain a pellet-like resin composition; ii) a method of preparing a pellet-like resin composition in the same manner as in the aforementioned preparation method i) except that a part of the components or a portion of the amount is introduced from the middle of the extruder; iii) a method of preparing a plural of compositions having different formulations by melt-kneading with an extruder, mixing them, and if necessary, further melt-kneading them to thereby obtain the intended composition; iv) a method of preparing a composition (master batch) containing a part of the components at a high concentration by melt-kneading it with an extruder, mixing it with the remaining portion, and if necessary, further melt-kneading it to thereby obtain the intended composition; v) a method of supplying the mixture of all components to compose the composition or a mixture of the master batch and the remaining portion to a molding machine, molding it to thereby obtain the intended composition as a molded article, and the like.

In addition, in view of the improvement of dispersibility of additives, it is preferable, in the preparation of the composition, to pulverize a part or the whole of the polyacetal resin as the base material, and to perform extrusion or the like after mixing the pulverized substance with other components.

The resin composition according to the present invention can be molded by any of extrusion molding, injection molding, compression molding, vacuum molding, blowing molding and expansion molding.

### Examples

The present invention will be explained in the following by referring to Examples, but is not limited to these Examples.

The measurements and evaluations were conducted as follows:

### <Tensile Strength and Elongation>

A tensile test piece according to ISO 3167 was allowed to stand for 48 hours under the conditions of a temperature of 23°C and a humidity of 50%, and was subjected to measurement according to ISO 527.

### <Amount of Generated Gas>

A plate test piece (100 mm x 40 mm x 2 mm; weight about 11.2 g) was suspended from a lid made of a polyethylene bottle (capacity 1000 ml) containing 50 ml of distilled water. The bottle was sealed to stand for 3 hours in a constant temperature oven at 60°C, followed by standing for 1 hour at a room temperature. The amount of formaldehyde which was emitted from the tabular test piece and was absorbed in the distilled water in the polyethylene bottle was quantitatively measured according to JIS K0102.29 (Item of Formaldehyde), and the amount of generated formaldehyde per unit weight was calculated.

### Examples 1 to 12, Comparative Examples 1 to 8

With the linear polyacetal resin (A1) were blended the branched and crosslinked polyacetal resin (A2), the hindered phenol-based antioxidant (B) and the hydrazide compound (C) in amounts shown in Table 1, and were melt-kneaded with an extruder at a cylinder temperature of 200°C to prepare pellet-like composition. A test piece was prepared from the pellet-like composition by using an injection molding machine, and the physical properties were evaluated according to the aforementioned evaluation methods. The results are shown in Table 1.

On the other hand, for comparison, pellet-like compositions were prepared and physical properties were evaluated in the same manner as case where the branched and crosslinked polyacetal resin was not added, the case where the hydrazide compound was not added, the case where the amount of each component was outside the case specified by the present invention. The results are shown in Table 1.

The components used in Examples and Comparative Examples are as follows:

### Linear polyacetal resin (A1)

A1-1: Polyacetal copolymer (hemiformal terminal group content = 0.38 mmol/kg, formyl terminal group content = 0.03 mmol/kg, unstable terminal group content = 0.15% by weight, melt index = 9 g/10 min.)
A1-2: Polyacetal copolymer (hemiformal terminal group content = 1.20 mmol/kg, formyl terminal group content = 0.60 mmol/kg, unstable terminal group content = 0.6% by weight, melt index = 9 g/10 min.)

The linear polyacetal resins A1-1 and A1-2 were prepared according to the following method.

The bulk polymerization was conducted in a continuous polymerization reactor of twin shaft paddle-type while rotating a rotation axis having paddles at 150 rpm by continuously adding a mixture of 96.7% by weight of trioxane and 3.3% by weight of 1,3-dioxolan, further continuously adding methylal as a molecular-weight modifier, and continuously adding boron trifluoride as a catalyst at a percentage of 15 ppm to the whole monomer content. The mixture of the trioxane and 1, 3-dioxolan contained pentaerythritol tetrakis[3-(3,5-di-t-butyl-4-hydroxyphenyl)propionate] in an amount of 0.03% by weight to the whole mixture. The mixture of the trioxane and 1,3-dioxolan to be polymerized contained 6 ppm of water, 3.5 ppm of methanol and 5 ppm of formic acid as impurities.

The polymer discharged from the outlet of the polymerization reactor was immediately subjected to pulverization and agitation treatment by adding an aqueous solution containing 1000 ppm of triethylamine to thereby deactivate the catalyst, and was then centrifuged and dried to obtain a crude polyoxymethylene copolymer.

The crude polyoxymethylene copolymer was introduced to a twin screw extruder having vent port, and was melt-kneaded at a resin temperature of about 220°C to thereby decompose the unstable terminal parts and exhaust volatile components containing the decomposed products from the vent port under reduced pressure. The polymer discharged from the die of the extruder was cooled and finely divided to obtain the pellet-like polyacetal resin A1-2 from which the unstable terminal parts were removed.

By using a cylindrical pressure-resistant vessel being capable of thermal insulation, the aforementioned pellet-like polymer was subjected to treatment for 8 hours in which the polymer was supplied continuously from the upper head and an aqueous solution of 135°C containing 500 ppm of triethylamine was supplied from the bottom, and was then centrifuged and dried to thereby obtain the polyacetal resin A1-1 which was further reduced in the hemiformal terminal group, formyl terminal group and unstable terminal parts.

The amounts of the hemiformal group and formyl terminal group of the polyacetal resins A1-1 and A1-2 were values (mmol/kg) obtained by measuring according to the method described in JP-A 2001-11143 through the use of AVANCE 400 Type FT-NMR available from Bruker. The melt index was a value (g/10 min.) measured according to ASTM-D1238 under the conditions of 190°C and 2160 g.

### Crosslinked polyacetal resin (A2)

The crosslinked polyacetal resins A2-1 to A2-3 were prepared in almost the same manner as in the preparation of the linear polyacetal resin A1-2, except that the trioxane (a), the compound selected from the cyclic ether compound and cyclic formal compound (b) and the polyfunctional glycidyl ether compound (c) were mixed in an ratio shown in Table 2, and were continuously supplied to the polymerization reactor. The melt indexes of the obtained crosslinked polyacetal resins A2-1 to A2-3 are shown in Table 2.

In the Table, the abbreviations of DO represents 1,3-dioxolan, BF represents 1,4-butanediol formal, TMPTGE represents trimethylolpropane triglycidyl ether.

### Hindered phenol-based antioxidant (B)

B1-1: pentaerythritol
   tetrakis[3-(3,5-di-t-butyl-4-hydroxyphenyl)propionate] Hydrazide compound (C)
C1: Stearic acid hydrazide
C2: Sebacic acid hydrazide
C3: 1-Naphthoic acid hydrazide

**Table 1**

| | Resin Composition | | | | | | | | Results of physical property | | |
|---|---|---|---|---|---|---|---|---|---|---|---|
| | Linear polyacetal resin (A1) | | Crosslinked polyacetal resin (A2) | | Antioxidant (B) | | Hydrazide compound (C) | | Tensile strength | Tensile elongation | Amount of generated gas |
| | Type | Part by weight | Type | Part by weight | Type | Part by weight | Type | Part by weight | MPa | % | ppm |
| Example 1 | A1-1 | 100 | A2-1 | 1 | B-1 | 0.3 | C1 | 0.1 | 63 | 31 | 1.3 |
| Example 2 | A1-1 | 100 | A2-1 | 3 | B-1 | 0.3 | C1 | 0.1 | 67 | 26 | 1.4 |
| Example 3 | A1-1 | 100 | A2-1 | 5 | B-1 | 0.3 | C1 | 0.1 | 70 | 24 | 1.4 |
| Example 4 | A1-1 | 100 | A2-1 | 10 | B-1 | 0.3 | C1 | 0.1 | 73 | 18 | 1.7 |
| Example 5 | A1-1 | 100 | A2-2 | 5 | B-1 | 0.3 | C1 | 0.1 | 71 | 24 | 1.3 |
| Example 6 | A1-1 | 100 | A2-3 | 5 | B-1 | 0.3 | C1 | 0.1 | 70 | 24 | 1.6 |
| Example 7 | A1-1 | 100 | A2-1 | 5 | B-1 | 0.3 | C2 | 0.05 | 72 | 27 | 2.1 |
| Example 8 | A1-1 | 100 | A2-1 | 5 | B-1 | 0.3 | C2 | 0.1 | 70 | 23 | 1.1 |
| Example 9 | A1-1 | 100 | A2-1 | 5 | B-1 | 0.3 | C2 | 0.5 | 68 | 26 | 0.3 |
| Example 10 | A1-1 | 100 | A2-1 | 5 | B-1 | 0.3 | C3 | 0.1 | 70 | 24 | 1.5 |
| Example 11 | A1-2 | 100 | A2-1 | 5 | B-1 | 0.3 | C1 | 0.1 | 71 | 25 | 1.8 |
| Example 12 | A1-2 | 100 | A2-1 | 5 | B-1 | 0.3 | C2 | 0.1 | 72 | 24 | 1.6 |
| Comparative Example 1 | A1-1 | 100 | - | - | B-1 | 0.3 | C1 | 0.1 | 56 | 33 | 1.0 |
| Comparative Example 2 | A1-1 | 100 | - | - | B-1 | 0.3 | C2 | 0.1 | 55 | 28 | 0.9 |
| Comparative Example 3 | A1-1 | 100 | - | - | B-1 | 0.3 | C3 | 0.1 | 55 | 35 | 1.1 |
| Comparative Example 4 | A1-1 | 100 | A2-1 | 5 | B-1 | 0.3 | - | - | 75 | 20 | 6.2 |
| Comparative Example 5 | A1-1 | 100 | A2-1 | 30 | B-1 | 0.3 | C1 | 0.1 | 79 | 3.7 | 1.7 |
| Comparative Example 6 | A1-1 | 100 | A2-1 | 5 | B-1 | 0.3 | C1 | 10 | 50 | 38 | 0.5 |
| Comparative Example 7 | A1-2 | 100 | - | - | B-1 | 0.3 | C1 | 0.1 | 53 | 27 | 1.1 |
| Comparative Example 8 | A1-2 | 100 | A2-1 | 5 | B-1 | 0.3 | - | - | 74 | 18 | 7.5 |

**Table 2**

| Crosslinked polyacetal | Trioxane (a) | Compound (b) | | Compound (c) | | Melt index (MI) |
|---|---|---|---|---|---|---|
| | (wt%) | Type | (wt%) | Type | (wt%) | (g/10min) |
| A2-1 | 98.2 | DO | 1.7 | TMPTGE | 0.1 | 1.5 |
| A2-2 | 98.2 | BF | 1.7 | TMPTGE | 0.3 | 0.9 |
| A2-3 | 98.0 | DO | 1.7 | TMPTGE | 0.3 | 0.9 |

## Claims

1. A polyacetal resin composition, obtained by blending, to 100 parts by weight of (A1) a polyacetal resin having substantially linear molecular structure, 0.01 to 20.0 parts by weight of (A2) a polyacetal resin having a branched or crosslinked structure, 0.01 to 5.0 parts by weight of (B) a hindered phenol-based antioxidant and 0.01 to 5.0 parts by weight of (C) a hydrazide compound.

2. The polyacetal resin composition according to claim 1, wherein the polyacetal resin (A1) is a polyacetal copolymer prepared by copolymerizing 99.9 to 90.0% by weight of (a) trioxane with 0.1 to 10.0% by weight of (b) a compound selected from a cyclic ether compound and a cyclic formal compound, having no substituent and has 1 to 50 g/min of melt index at 190°C under a load of 2160 g, 1.0 mmol/kg or less of hemiformal terminal group, 2.0 mmol/kg or less of formyl terminal group and 0.5% by weight or less of an unstable terminal group.

3. The polyacetal resin composition according to claim 1 or 2, wherein the polyacetal resin (A2) is a crosslinked polyacetal copolymer prepared by copolymerizing 99.89 to 88.0% by weight of (a) trioxane, 0.1 to 10.0% by weight of (b) a compound selected from a cyclic ether compound and a cyclic formal compound, having no substituent, and 0.01 to 2.0% by weight of (c) a polyfunctional glycidyl ether compound, and has 0.1 to 10 g/min of melt index at 190°C under a load of 2160 g.

4. The polyacetal resin composition according to claim 4, wherein the polyfunctional glycidyl ether compound (c) is a compound selected from a trifunctional glycidyl ether and a tetrafunctional glycidyl ether.

5. The polyacetal resin composition according to any one of claims 1 to 4, wherein the content of the polyacetal resin (A2) having a branched or crosslinked structure is 0.01 to 2.0 parts by weight to 100 parts by weight of the polyacetal resin (A1).

6. The polyacetal resin composition according to any one of claims 1 to 4, wherein the content of the polyacetal resin (A2) having a branched or crosslinked structure is 2.0 to 20.0 parts by weight to 100 parts by weight of the polyacetal resin (A1).

7. The polyacetal resin composition according to any one of claims 1 to 6, further comprising 0.01 to 2.0 parts by weight of a fatty acid-based bisamide compound to 100 parts by weight of the polyacetal resin (A1).

8. The polyacetal resin composition according to any one of claims 1 to 7, further comprising 0.01 to 2.0 parts by weight of a colorant to 100 parts by weight of the polyacetal resin (A1).
